# EUROPÄISCHE PATENTSCHRIFT

(11) **EP 2 094 806 B1**
(45) Veröffentlichungstag und Bekanntmachung des Hinweises auf die Patenterteilung: **23.03.2011**
(21) Anmeldenummer: 07803538.3
(22) Anmeldetag: 18.09.2007
(51) Int. Cl.: C09J 201/00, C09D 201/02, B32B 7/12

(54) **VERNETZENDE FOLIENKLEBSTOFFE**
CROSS-LINKING FILM ADHESIVES
ADHÉSIFS PELLICULAIRES À EFFET RÉTICULANT

(30) Priorität: 24.11.2006 DE 102006055944
(43) Veröffentlichungstag der Anmeldung: 02.09.2009
(73) Patentinhaber: Henkel AG & Co. KGaA, 40589 Düsseldorf (DE)
(72) Erfinder: MÖLLER, Thomas, 40593 Düsseldorf (DE); KOLLBACH, Guido, Apex, NC 27502 (US); GENTSCHEV, Pavel, 40789 Monheim (DE); MECKEL-JONAS, Claudia, 201702 Shanghei (CN); BIALAS, Norbert, 41542 Dormagen (DE)
(86) Internationale Anmeldenummer: PCT/EP2007/059824
(87) Internationale Veröffentlichungsnummer: WO 2008/061827

(56) Entgegenhaltungen:
- EP-A- 0 596 461
- EP-A- 1 593 728
- US-A- 4 602 061

## Beschreibung

Die Erfindung betrifft Bindemittelsysteme, die über eine Michael-Reaktion vernetzbar sind und die als Bindemittelsystem in Klebstoffen eingesetzt werden können.

Zweikomponenten Bindemittelsysteme zur Verwendung in Klebstoffen sind allgemein bekannt. So haben sich 2K-PU-Klebstoffe in der Praxis bewährt. Diese Polyurethanklebstoffe haben jedoch den Nachteil, dass in den nicht vernetzten Klebstoffen herstellungsbedingt Anteile von niedermolekularen, flüchtigen Isocyanaten enthalten sind. Von solchen Isocyanaten ist jedoch bekannt, dass sie gesundheitliche Gefahren bei unsachgemäßer Verarbeitung hervorrufen können. Es hat darum viele Versuche gegeben Klebstoffe zu entwickeln, die als vernetzendes System keine Isocyanatgruppen benötigen. So sind in der DE 10 2004 035542 Bindemittelsysteme für Klebstoffe beschrieben, wobei eine Komponente reaktive Aminogruppen enthält, während die andere Komponente als reaktive Gruppe cyclische Carbonate enthält.

Eine andere chemische Reaktion ist die Michaeladdition, die als reaktive Gruppen einen Michael-Donor enthält, und als zweite funktionelle Gruppe eine Michael-Akzeptor-Gruppe. Solche Systeme sind beispielsweise aus der EP 1283235 bekannt. Dort werden Zusammensetzungen beschrieben, die aus mehrfunktionelle α-β-ungesättigte Carbonsäureester enthalten, sowie als zweite Komponente polymere β-Dicarbonylverbindungen, wobei die Polymere als Polyester oder Polyesteramine beschrieben sind.

Weiterhin ist beispielsweise die EP 0808 860 bekannt bei der ebenfalls Bindemittelmischungen auf Basis von Polymeren beschrieben werden, wobei eine Komponente α-β-ungesättigte Carbonylgruppen aufweist, die zweite Komponente mehrere Malonestergruppen aufweist und als dritte Komponente ein Katalysator enthalten ist, der die Michaeladdition hervorruft.

Weiterhin ist die EP 1593 727 bekannt, bei der Zweikomponentensysteme beschrieben werden, wobei in der ersten Komponente ein Polymer mit einer Vielzahl von Michael-Akzeptoren vorliegt, in der zweiten Komponente ein Polymer mit einer Vielzahl von Michael-Donor-Gruppen, wobei ein schwach basischer Katalysator in der fertigen Bindemittelmischung enthalten sein muss.

Weiterhin ist die EP 1435383 bekannt. Dort werden Michael-vernetzende Bindemittelsysteme beschrieben, wobei auf ein Substrat eine Schicht einer Mischung aufgetragen wird, die mindestens einen mehrfunktionellen Michael-Donor enthält, mindestens einen mehrfunktionellen Michael-Akzeptor und einen stark basischen Katalysator. Auf das damit beschichtete Substrat wird dann ein weiteres Substrat verklebt.

Die bekannten Zusammensetzungen enthalten jeweils ein Polymer oder ein Oligomer, das mehrere Michael-Donor Gruppen enthält. Als zweite Komponente werden dort Polymere oder Oligomere beschrieben, die mehrere Michael-Akzeptor-Gruppen aufweisen. Damit sind solche Bindemittelsysteme Zweikomponentensysteme, wobei beide reaktiven Polymere in unterschiedlichen Komponenten vorliegen. Um eine ausreichende Vernetzung sicherzustellen, muss ein vorgegebenes Mischungsverhältnis eingehalten werden. Das Mischungsverhältnis ist von der Funktionalität der Reaktionspartner abhängig. Das exakte Mischen ist aufwändig. Weiterhin zeigen solche Zusammensetzungen häufig eine ungünstige Reaktivität, so dass spezielle Katalysatoren eingesetzt werden müssen.

Die vorliegende Erfindung hat deshalb die Aufgabe ein Bindemittelsystem zur Verfügung zu stellen, dass für eine Vielzahl von Anwendungsfeldern geeignet ist, wie Klebstoffe für harte oder flexible Substrate aus unterschiedlichen Materialien, als Vergussmassen für Bauteile oder zur Beschichtung von Oberflächen, wobei beide vernetzenden Gruppen in einer Komponente vorliegen, als zweite Komponente eine Katalysatormischung bereit gestellt wird, mit der die Vernetzungsreaktion der Mischung sichergestellt werden kann.

Die Aufgabe wird gelöst durch einen Zweikomponentensystem, bestehend aus einer Komponente A und einer Komponente B, enthaltend A) mindestens ein Polymer, das mindestens eine Michael-Akzeptor-Gruppe und zusätzlich mindestens eine Michael-Donor-Gruppe aufweist und beide funktionellen Gruppen einzeln oder als Gruppe endständig an der Polymerkette arrangiert sind, B) eine die Michael-Reaktion katalysierende Verbindung, sowie gegebenenfalls weiteren Additiven und/oder Hilfsstoffen, wobei das Polymer der Komponente A ein zahlenmittleres Molekulargewicht (M_{N}) zwischen 1000 g/Mol bis 1.000.000 g/Mol aufweist.

Die Erfindung betrifft weiterhin ein Verfahren zum Verkleben von flexiblen Substraten mit über Michael-Addition vernetzende Klebstoffe. Die Erfindung betrifft weiterhin einen Zweikomponentenklebstoff auf Basis eines über M-Addition vernetzenden Bindemittelsystems.

Unter Klebstoff-Basispolymeren werden thermoplastische synthetische Polymere verstanden, die für Kebstoffe wichtige Eigenschaften wie Haftung, Festigkeit und Temperaturverhalten im Wesentlichen bestimmen. Beispiele für solche Polymere sind thermoplastische Elastomere; Polymerisate wie Ethylen-Vinylacetat-, SIS-, SBS-, SEBS-Copolymere; Polyolefine, wie amorphe oder semikristalline Polyolefine, insbesondere Propylen- oder Ethylenhomo- oder Copolymere, reaktive und nicht reaktive lineare oder verzweigte thermoplastische Polyurethane; Polyamidharze, Copolyamide, wie Polyetheramide, Polyesteramide, Polyester, Polyether, Polycarbonate, Silikone oder Poly(meth)acrylate. Solche Polymere sollen noch funktionelle Gruppen aufweisen, wie OH-, NH-, NCO-, SH-, COOH-Gruppen, die zu einer weiteren Reaktion befähigt sind.

Basispolymere, aus denen die erfindungsgemäß funktionalisierten Bindemittel der Komponente A hergestellt werden können, sind insbesondere Polyester, Polyether, Polyurethane, Polyamide, Polyesteramide, Poly(meth)acrylate, Copolymere auf der Basis von Vinylestern, Silikone oder Gemische daraus. Diese sollen die oben erwähnt funktionellen Gruppen aufweisen, die dann unter Bildung von Michael-Donor oder -Acceptorgruppen modifiziert werden können, oder sie weisen eine der erfindungsgemäß notwendigen Michael-funktionellen Gruppen direkt aus ihrer Herstellung auf.

Unter funktionellen Gruppen die als Michael-Donor wirken, sind Gruppen zu verstehen, die ein- oder zwei CH-acide Wasserstoffatome enthalten. Sie weisen die Struktur

Z-CHR-Z'

auf, wobei
Z und Z' unabhängig elektronenziehende Substituenten wie Aldehyd-, Keton-, Ester-, Amid-, Anhydrid-, Nitril-, Nitro-, Sulfoxid- oder Sulfon-Gruppen sein können und R = Z , H oder ein C1 bis C3 Alkylrest sein kann. Diese funktionellen Gruppen sind über die Reste Z und/oder Z' mit der Polymerkette verbunden.

Solche Gruppen sind beispielsweise in Verbindungen vorhanden, die sich von β-Dicarbonylverbindungen ableiten, wie Acetessigsäureestern, Malonsäurediestern oder den entsprechenden Amiden, Diketonen oder Methantricarbonsäureestern; α-Cyano-Carbonylderivate, wie Cyanessigsäure oder α-Cyanketoderivate; Biscyanomethylenderivate, wie Malondinitril; Carbonylderivate mit α-ständigen Sulfoxidgruppen, wie Sulfoessigsäure oder die entsprechenden Amide. Geeignete Verbindungen mit solcher Michael-Donor Aktivität sind beispielsweise Malonsäuredimethylester, -diethyld, -dibutyl-, -dipentylester-, Acetessigsäuremethylester, -ethyl-, -butyl-, -pentylester, N-substituierte Essigsäureamide oder Methantricarbonsäuremethyl-, ethyl-, butylester.

Erfindungsgemäß muss mindestens eine Michael-Donor-Gruppe im Polymeren vorhanden sein, es können jedoch auch mehrere Gruppen vorhanden sein. Das CH-Äquivalentgewicht, bezogen auf die Menge der aciden CH-Gruppen, liegt im Allgemeinen zwischen 100 bis 5.000 vorzugsweise 200 bis 2.000 g/mol. Die Anzahl der Michael-Donor-Gruppen hängt vom Molekulargewicht und der beabsichtigten Vernetzungsdichte ab. In einer Ausführungsform sollen zwischen zwei bis zu zehn, insbesondere bis zu fünf Michael-Donor-Gruppen in Polymerkette enthalten sein.

Unter funktionellen Gruppen, die als Michael-Akzeptor wirken, sind funktionelle Gruppen zu verstehen, die ungesättigte Doppelbindungen aufweisen und in α-Stellung mindestens einen Elektronen anziehenden Substituenten aufweisen. Insbesondere handelt es sich dabei um α-β-ungesättigte Carbonylverbindungen wie α-β-ungesättigte Aldehyde oder Ketone, Acrylsäurederivate, Methacrylsäurederivate, Crotonsäurederivate, Itaconsäurederivate, Maleinsäurederivate, Fumarsäurederivate, Citraconsäurederivate, Zimtsäurederivate, α-Sulfon- oder Phosphon-ungesättigte Verbindungen, wie Vinylsulfonderivate, Vinylphosphonderivate oder Nitro-Styrolderivate.

Erfindungsgemäß muss mindestens eine Michael-Akzeptor-Gruppe im Polymeren vorhanden sein. Es können sich jedoch aber zwei bis zu zehn, insbesondere bis zu fünf Michael-Akzeptor-Gruppen in dem Polymergerüst einreagiert sein. Es kann sich um unterschiedlich funktionelle Michael-Akzeptor-Gruppen handeln, bevorzugt handelt es sich jedoch um gleiche funktionelle Gruppen.

Erfindungsgemäß geeignete Polymere müssen mindestens eine Michael-Akzeptor-Gruppe und mindestens eine Michael-Donor-Gruppe im Molekül aufweisen gemäss Anspruch 1. Die Summe aus Michael-Donor- und Michael-Akzeptor-Gruppe soll ≥ 2 sein.

Bevorzugt sollen die Polymere linear sein, es ist jedoch auch möglich, Anteile von verzweigten oder sternförmigen Polymeren einzusetzen. In dieser Ausführungsform können die Enden der verzweigten Ketten ebenfalls durch Michael-Akzeptor und/oder Michael-Donor-Gruppen funktionalisiert sein.

Das Molekulargewicht (M_{N}) soll zwischen 1000 g/Mol bis 1.000.000 g/Mol (zahlenmittleres Molekulargewicht, wie durch GPC bestimmbar) betragen, insbesondere zwischen 2500 bis 100000 g/mol. Es soll bei einer Anwendung in lösemittelfreien Systemen bevorzugt bis zu 50000 g/mol betragen, in gelösten Systemen kann die Untergrenze auch bei mehr als 10000 g/mol liegen. Um ein elastisches vernetztes Polymer zu erhalten, sollen die Abstände zwischen den reagierenden funktionellen Gruppen in der Polymerkette groß sein, deswegen sind endständig komplementär funktionalisierte Polymere mit einzelnen Gruppen oder mit einem Block gleicher Gruppen bevorzugt. Will man ein möglichst starres vernetztes Polymer erhalten, so sollten die Abstände zwischen den funktionellen Gruppen in der Polymerkette kurz sein.

Die Herstellung der erfindungsgemäß geeigneten Polymere kann auf an und für sich bekannte Art und Weise erfolgen. Eine Ausführungsform der Erfindung enthält Polymere, die bei ihrer Synthese bereits geeignete Michael-funktionelle Gruppen, wie beispielsweise ungesättigte Ester- oder Amidgruppen oder β-Dicarbonylgruppen, enthalten. Ein anderes Herstellungsverfahren geeigneter Polymere verwendet die oben erwähnten Basispolymere. Dazu müssen die Basispolymere noch funktionelle reaktive Gruppen aufweisen. Diese werden dann mit niedermolekularen Verbindungen mit einem Molekulargewicht unterhalb von 500 umgesetzt, die jeweils eine funktionelle Gruppen, Michael-Donor oder Michael-Akzeptor, aufweisen. Durch Auswahl der Reaktionspartner können dann die Polymere gezielt mit den Michael-reaktiven Gruppen umgesetzt werden. Dabei ist darauf zu achten, dass unter den Reaktionsbedingungen keine Reaktion zwischen ggf. gleichzeitig vorhandenen Michael-Donor- und Michael-Akzeptor-Gruppen stattfindet.

Eine Umsetzung zum Aufbau von Michael-Donor- Gruppen kann beispielsweise durchgeführt werden, indem OH-Gruppen-haltige Ester von beispielsweise Malonsäure, Acetessigsäure, Acetessigamiden mit im Basispolymeren vorhandenen Carboxyl- oder Estergruppen umgeestert werden. Eine weitere Reaktionsmöglichkeit ist bekannt, indem beispielsweise Isocyanat-funktionalisierte β-Dicarbonylverbindungen mit am Polymergerüst vorhandenen OH-, SH- oder NH-Gruppen umgesetzt werden. Unter Bildung einer Urethan- oder Harnstoffgruppe werden dann funktionalisierte Polymere enthalten, die eine Michael-Donor-Gruppe aufweisen. Ebenso ist es möglich Amin-funktionalisierte β-Dicarbonylderivate mit an den Polymerketten vorhanden Carboxyl- oder Estergruppen unter Amidbildung umzusetzen. In diesem Fall ist darauf zu achten, dass keine Michael-Akzeptor-Gruppen in Polymeren enthalten sind, um eine vorzeitige Umsetzung mit den Aminogruppen zu vermeiden.

Erfindungsgemäß bevorzugt ist ein Verfahren, am Polymer vorhandene H-aktive Zentren, wie OH, NH, COOH usw., mit Diisocyanaten umzusetzen. Dabei werden Basispolymere als Zwischenprodukt enthalten, die reaktive NCO-Gruppen enthalten. Diese könne in einem zweiten Reaktionsschritt ohne weitere Isolierung zum Beispiel mit Hydroxy- oder Amin-funktionalisierten β-Dicarbonylverbindungen oder den oben beschriebenen Verbindungen umgesetzt werden. Man erhält dann Polymere mit definierter Menge an Michael-Donor-Gruppen.

Eine besondere Ausführungsform stellt aus den Basispolymeren NCO-terminierte Reaktionsprodukte her. Diese werden dann mit nicht zusätzlich funktionalisierten Michael-Donor-Verbindungen umgesetzt, die gemäß angegebene Formel R = H aufweisen, beispielsweise Malondiester , Acetessigester. Es entstehen dabei Polymere mit Amidogruppen-haltigen CH-aciden Methin-Gruppen, die als erfindungsgemäß geeignete Michael-Donor-Gruppe reagieren können.

Eine analoge Reaktionsweise ist möglich um Michael-Akzeptor-Gruppen in die Basispolymere einzubauen. Dabei können beispielsweise Hydroxy-substituierte Alkylester von α-β-ungesättigten Carbonsäuren, Hydroxy-substituierte Alkylamide von ungesättigten Carbonsäuren durch Umesterung mit Carboxyl- oder Estergruppen des Polymeren umgesetzt werden. Eine weitere Arbeitsweise setzt, wie oben bereits beschrieben, OH,NH,SH oder analoge Gruppen des Basispolymeren mit Diisocyanaten um. Diese werden anschließend in einem weiteren Reaktionsschritt mit OH,SH-substituierten α-β-ungesättigten aktivierte Doppelbindungen enthaltenen niedermolekularen Verbindungen, wie oben bereits beispielhaft aufgezählt, umgesetzt.

Die allgemeinen Reaktionsweisen sind dem Fachmann bekannt und bedürfen keiner näheren Erläuterung. Sie können ggf. durch erhöhte Temperaturen oder spezielle Katalysatoren unterstützt werden, so dass die Polymerketten bei der Reaktionen nicht zerstört werden. Die Reihenfolge der Synthese ist so zu wählen, dass keine vorzeitige Vernetzung stattfindet. Es können so geeignet funktionalisierte Polymere hergestellt werden, die gleichzeitig entgegengesetzt reaktiven Michael-Gruppen aufweisen.

Erfindungsgemäß muss als Komponenten B eine die Michael-Reaktion katalysierende Verbindung vorhanden sein. Diese besteht aus Katalysatoren in Form von Lewis-Basen oder Brönstedt-Basen, wobei die konjugierten Säuren der letzteren einen pK_{A}-Wert von mindestens 10 haben. Dabei handelt es sich insbesondere um aminhaltige oder aminfreie Basen. Beispiele für Amin-freie Basen sind Hydroxide oder Alkoholate von Alkalimetallen wie LiOH, NaOH, KOH, NaH, KH, CaH₂, Na-Methanolat, Na-Ethanolat, K-Methanolat, K-tert.-Butanolat, Kaliumcarbonat, Calciumcarbonat oder ähnliche Verbindungen.

Als besonders geeignet erweisen sich Lewis-Basen, wie z.B. solche aus der Gruppe von cycloaliphatischen Aminen, wie Diazabicyclooctan (DABCO), tert.-aliphatischen Aminen, wie Triethylamin, Tripropylamin, Tributylamin, N-Methyldiethanolamin, N-Methyldiisopropylamin oder N-Butyldiethanolamin, sowie Amidinen wie Diazabicyclononen (DBN), Diazabicycloundecen (DBU), und Guanidinen, wie z.B. N,N,N',N'-Tetramethylguanidin, Pyridinderivate, wie Copolymere der 2,3,4-Vinylpyridine oder Aminhaltige Acrylatcopolymere, wie Acrylsäure-(2-dimethylaminoethyl)ester, Acrylsäure-(2-diethylaminoethyl)ester, oder Acrylsäure-(3-dimethylaminopropyl)ester. Weitere Beispiele sind alkyl- oder arylsubstituierte Phosphane, wie z.B. Tributylphosphan, Triphenylphosphan, Trisp-tolylphosphan, Methyldiphenylphosphan, sowie hydroxy- und aminfunktionalisierte Phosphane. Es sind auch basische lonenaustauschharze geeignet.

Die Komponente B kann aus einem oder mehreren Katalysatoren bestehen. Sie kann auch weitere Hilfsstoffe enthalten, die eine homogene Mischung mit dem Katalysator bilden können. Es ist bevorzugt die Komponente B so mit inerten Hilfsstoffen zu versetzen, dass beim Herstellen einer Mischung aus A) und B) eine gute Handhabung ermöglicht wird.

Die Komponenten A und B ergeben ein erfindungsgemäßes 2-Komponenten Bindemittelsystem. Durch Mischen mit weiteren Bestandteilen können daraus beispielsweise 2-Komponenten Klebstoffe hergestellt werden. In einer oder beiden Komponenten können dabei außer den beschriebenen Bestandteilen noch weitere Hilfsstoffe oder Additive enthalten sein. Beispiele dafür sind Weichmacher, inerte Zusatzbindemittel, Harze, Weichmacher, Wachse, Haftvermittler, Pigmente/Füllstoffe, Viskositätsregler, ggf. Lösemittel, Verlaufsmittel, Stabilisatoren. Diese sind allgemein bekannt. Die Auswahl dieser Hilfsstoffe richtet sich nach dem Anwendungszweck des Bindemittelsystems.

Ein weiterer Bestandteil solcher erfindungsgemäßer Klebstoffe können Weichmacher sein. Diese Weichmacher werden vorzugsweise zum Einstellen der Viskosität oder der Flexibilität verwendet und sind im allgemeinen in einer Konzentration von 0-25 Gew.%, vorzugsweise von 2-15 Gew.% enthalten. Geeignete Weichmacher sind beispielsweise medizinische Weißöle, naphtenische Mineralöle, Polypropylen-, Polybuten-, Polyisopren-Oligomere, hydrierte Polyisopren- und/oder Polybutadien-Oligomere, Benzoatester, Phthalate, Adipate, pflanzliche oder tierische Öle und deren Derivate. Auch Polypropylenglykol, Polybutylenglykol oder Polymethylenglykol sind geeignet.

Die Stabilisatoren haben die Aufgabe, die Klebstoffzusammensetzung während der Verarbeitung vor Zersetzung zu schützen. Hier sind insbesondere Antioxidantien zu nennen oder auch Lichtschutzmittel. Sie werden üblicherweise in Mengen bis zu 3 Gew.-%, vorzugsweise in Mengen von etwa 0,1 bis 1,0 Gew.-% dem Schmelzklebstoff beigefügt.

Darüber hinaus kann der erfindungsgemäße Klebstoff Haftvermittler enthalten. Haftvermittler sind Stoffe, die die Adhäsion des Klebstoffs zu dem zu verklebenden Substrat verbessern. Insbesondere sollen Haftvermittler das Alterungsverhalten von Klebungen unter Einfluss von feuchter Atmosphäre verbessern. Diese können auch die Benetzungseigenschaften des Klebstoffs und damit das Haftvermögen auf den Substraten beeinflussen.

Solche weitere Additive, wie Pigmente, Farbstoffe, Stabilisatoren, Wachse oder Haftvermittler sind dem Fachmann bekannt. Es sind kommerzielle Produkte und der Fachmann kann sie entsprechend den gewünschten Eigenschaften auswählen. Dabei ist darauf zu achten, dass eine Verträglichkeit mit der Polymermischung gegeben ist.

Die Additive können in einer oder beiden Komponenten enthalten sein. Dabei ist darauf zu achten, dass diese Stoffe nicht mit dem Bindemittel oder den Katalysator reaktiv sind. Sie sollen so ausgewählt werden, dass eine gute Verarbeitung möglich ist. Es ist vorteilhaft, wenn beide Komponenten eine ähnlich Viskosität aufweisen.

Eine Vernetzung des erfindungsgemäßen Bindemittelsystems oder der daraus herstellbaren Klebstoffe oder anderer Produkte geschieht durch Mischen der Komponente A mit dem Katalysator in Komponente B. Das kann ansatzweise geschehen oder es kann eine kontinuierliche Arbeitsweise gewählt werde. Die Vernetzung kann durch erhöhte Temperaturen beschleunigt werden.

Das erfindungsgemäße Bindemittelsystem ist für verschiedene Anwendungszwecke geeignet. Beispielsweise ist es möglich dünnviskose Klebstoffe herzustellen. Dazu kann das funktionalisierte Polymere in organischen Lösemittel gelöst werden. Dabei soll es sich im Wesentlichen um flüchtige Lösemittel handeln, die ggf. bei erhöhter Temperatur bis zu 100°C abdampfen können. Es können noch weitere oben aufgeführte Additive enthalten sein.

Eine weitere Ausführungsform ist ein lösemittelfreier Klebstoff. Dabei weist das Polymer eine Viskosität auf, die so niedrig ist, dass die oben genannten Zusatzstoffe zugemischt werden können. Weiterhin ist es möglich, in solchen Mischungen auch niedermolekulare Michael-reaktive Oligomere zu zusetzen. Diese wirken als Reaktivverdünner und können die Viskosität der Bindemittelmischung beeinflussen. Beispiele für solche reaktiven niedermolekularen Verbindungen sind beispielsweise Ester mehrwertiger niedermolekularer Alkohole mit Malonestern oder β-Dicarbonylester, die als Michael- Donor wirken, es können aber auch α-β-ungesättigte Carbonsäureester umgesetzt werden, die dann als zusätzlicher niedrigviskoser Michael-Akzeptor wirken. Unter niedermolekulare sollen Verbindungen mit einer Molmasse zwischen 150 bis 1500 g/mol verstanden werden, insbesondere bis 800 g/mol.

Ein weiterer Gegenstand der Erfindung sind Vergussmassen auf Basis des Bindemittelsystems. Diese werden im Allgemeinen mit Pumpen gefördert, d.h. die Massen sollen als Mischung mindestens hochviskos sein. Es können in diesem Fall die oben erwähnten Zusatzstoff oder auch feinverteilte Pigmente enthalten sein.

Die oben genannten Mischungen können für verschiedene Anwendungszwecke eingesetzt werden. Beispielsweise können Klebstoffe hergestellt werden, wobei es sich um Folienklebstoffe, Laminierklebstoffe, Struktürklebstoffe, Papierklebstoffe usw. handeln kann. Weiterhin können solche Zusammensetzungen auch als Vergußmasse eingesetzt werden. Eine weitere besondere Ausführungsform der erfindungsgemäßen Polymermischungen ist die Verwendung als Beschichtung. Es kann sich dabei um Inmould-Beschichtungen handeln, oder Substrate werden der Oberfläche mit einer entsprechenden Beschichtung versehen, die dann vernetzt werden kann.

Insbesondere geeignet sind die Bindemittelsysteme zum Herstellen von Klebstoffen, insbesondere als zweikomponentiger Verpackungs- oder Laminierklebstoff.

Die erfindungsgemäßen Klebstoffe zeigen eine gute Haftung. Sie haben den Vorteil, dass sie keine migrationsfähigen oder flüchtigen Isocyanate oder Isocyanatabbauprodukte wie Aminen aufweisen. Wenn entsprechende weitere Rohstoffe ausgewählt werden, ist es möglich, dass solche Klebstoffe für die Lebensmittelverpackung oder Arzneimittelverpackung geeignet sind.

Die Verklebungen mit den erfindungsgemäß geeigneten Klebstoffen sind flexibel. Sie haften auf eine Vielzahl von unterschiedlichen Folien wie PE-Folien, PP-Folien, Polyamid-Folien, PET-Folien usw. Durch die Auswahl der Additive kann sichergestellt werden, dass farblose oder transparente Farbstoffe hergestellt werden können. Diese bilden in dünner Schicht flexible gut haftende Verbundfolien, die auch in der Kälte bei tiefen Temperaturen bzw. auch in erwärmten Zustand eine gute Verklebung bewirken.

### Beispiele

### nicht erfindungsgemäss Beispiel 1

### OH-terminierte Malonat-haltiger Polyester

32 g Malonsäurediethylsäureester und 173 g Neopentylglykol werden gemischt und unter einem Schutzgas (Stickstoff) auf 150°C erhitzt. Nach 30 Minuten wird 0,2 Titantetraisopropoxid zugegeben, homogenisiert, wobei das abdestillierte Kondensat aufgefangen und entfernt wird. Zum Schluss der Destillation wird ein Vakuum von 650 mbar angelegt und schrittweise auf 10 mbar erniedrigt.

Das Produkt hat eine Viskosität von 200 mPas (100°C) und eine OH-Zahl von 91.

195 g des Polyesters werden mit 59,4 g MDI gemischt untergerührt und bei max. 100°C eine Stunde lang gehalten. Danach 0,25 g Stabilisator (BHT) sowie 16,4 g 2-Hydroxy-Ethylacrylat zugegeben. Es wird bei erhöhter Temperatur für vier Stunden gerührt.

Das entstehende Produkt hat eine Viskosität von 6400 mPas (100°C) (Kegel-Platte -Viskosimeter, DIN-53229).

Das entstehende Polymer wird in Ethylessigester gelöst mit einem Festkörper von 35 % (Komponente A).

Als Komponente B wird 1,5-Diazabicyclo-(4,3,0)-non-5-en in 10 %-iger Lösung in Ethylacetat (Komponente B) hergestellt.

Komponente A wird mit 0,1 Gew.-% (Festkörper) des Katalysators versetzt, gemischt und als Film auf eine Polymerfolie gegossen.
Der Polymerfilm vernetzt bei Raumtemperatur in 24 Stunden zu einem elastischen Film.

## Patentansprüche

1. Zwei-Komponenten-Bindemittelsystem bestehend aus einer Komponente A und einer Komponente B, enthaltend in
Komponente A) mindestens ein Polymer, das mindestens eine Michael-Akzeptor-Gruppe aufweist, sowie zusätzlich mindestens eine Michael-Donor-Gruppe und beide funktionellen Gruppen einzeln oder als Gruppe endständig an der Polymerkette anreagiert sind, und in
Komponente B) eine die Michael-Reaktion katalysierende Verbindung,
sowie ggf. weitere Additive und/oder Hilfsstoffe,
**dadurch gekennzeichnet, dass** das Polymer der Komponente A ein zahlenmittleres Molekulargewicht (M_{N}) zwischen 1000 g/mol bis 1000000 g/mol aufweist.

2. Zwei-Komponenten-Bindemittelsystem nach Anspruch 1, **dadurch gekennzeichnet, dass** das zahlenmittlere Molekulargewicht des Polymeren zwischen 1500 g/mol bis 100000 g/mol beträgt.

3. Zwei-Komponenten-Bindemittelsystem nach einem der Ansprüche 1 bis 2, **dadurch gekennzeichnet, dass** die mittlere Funktionalität als Summe aus Michael-Donor und Michael-Akzeptor größer/gleich 2 pro Polymerkette beträgt, insbesondere dass die Funktionalität von Michael-Donor- und Michael-Akzeptor unabhängig voneinander größer/gleich 2 beträgt.

4. Zwei-Komponenten-Bindemittelsystem nach einem der Ansprüche 1 bis 3, **dadurch gekennzeichnet, dass** das Basis-Polymer ausgewählt wird aus Polyamid, Polyester, Polyether, Polyurethan, Poly(meth)acrylat, Silikon oder Vinylestercopolymeren, wobei die Polymerkette im Wesentlichen linear aufgebaut ist.

5. Zwei-Komponenten-Bindemittelsystem nach einem der Ansprüche 1 bis 4, **dadurch gekennzeichnet, dass** der Michael-Donor ausgewählt wird aus β-Dicarbonyl-Gruppen, α-Cyano-Carbonylderivaten, Carbonylderivate mit α-Sulfoxid- oder α-Sulfo-Gruppen oder Biscyanomethylen-Gruppen.

6. Zwei-Komponenten-Bindemittelsystem nach einem der Ansprüche 1 bis 5, **dadurch gekennzeichnet, dass** als Komponente B aminhaltige oder aminfreie Basen eingesetzt werden, insbesondere flüchtige oder nichtflüchtige organische Amine oder Aminogruppen-haltige Polymere.

7. Zwei-Komponenten-Klebstoff enthaltend ein Bindemittelsystem nach einem der Ansprüche 1 bis 6.

8. Zwei-Komponenten-Klebstoff nach Anspruch 7, **dadurch gekennzeichnet, dass** Hilfsstoffe und/oder Additive unter 35 Gew.% enthalten sind, insbesondere dass der Klebstoff frei von organischen Lösemitteln ist und auch kein Wasser enthält.

9. Zwei-Komponenten-Klebstoff nach einem der Ansprüche 7 bis 8, **dadurch gekennzeichnet, dass** der Klebstoff eine Viskosität unterhalb von 5000 mPas bei einer Temperatur bis zu 50 °C aufweist.

10. Zwei-Komponenten-Klebstoff nach einem der Ansprüche 7 bis 8, **dadurch gekennzeichnet, dass** die Komponente A zusätzlich niedermolekulare Verbindungen mit einem Molekulargewicht zwischen 150 bis 1500 g/mol enthält, die mindestens zwei Michael-Donor oder Michael-Akzeptor-Gruppen aufweisen.

11. Verfahren zum Verkleben von flexiblen Substraten, **dadurch gekennzeichnet, dass** auf eine Substratoberfläche ein Klebstoff nach einem der Ansprüche 7 bis 10 aufgetragen wird, ggf. flüchtige Lösemittel abdampft werden und danach das zweite Substrat auf die beschichtete Oberfläche unter Druck aufgebracht wird.

12. Verfahren zum Verkleben von flexiblen Substraten nach Anspruch 11, **dadurch gekennzeichnet, dass** auf eine Substratoberfläche Komponente A aufgetragen wird, auf eine zweite Substratoberfläche Komponente B und danach beide Oberflächen unter Druck miteinander verklebt werden, wobei gegebenenfalls der verklebte Substratverbund auf eine Temperatur zwischen 25 °C bis zu 75 °C erwärmt wird.

13. Verfahren zum Verkleben von flexiblen Substraten nach einem der Ansprüche 11 bis 12, **dadurch gekennzeichnet, dass** Komponente A an der Substratoberfläche eine lagerstabile Schicht ausbildet.

14. Verwendung eines Klebstoffs nach einen der Ansprüche 7 bis 10 als Klebstoff zum Verkleben von flexiblen folienförmigen Substraten, oder als Strukturklebstoff zum Verkleben von Holz, Metall, Glas, Papier und ähnlichen Substraten.

## Claims

1. A two-component bonding agent system consisting of a component A and a component B, comprising in
component A) at least one polymer that possesses at least one Michael acceptor group, as well as additionally at least one Michael donor group and both functional groups have been separately or as a group terminally reacted onto the polymer chain, and in
component B) a compound catalysing the Michael reaction as well as optional additional additives and/or auxiliaries,
**characterized in that** the polymer of the component A has a number average molecular weight (Mₙ) between 1000 g/mol and 1 000 000 g/mol.

2. The two-component bonding agent system according to claim 1, **characterized in that** the number average molecular weight of the polymer is between 1500 g/mol and 100 000 g/mol.

3. The two-component bonding agent system according to one of the claims 1 to 2, **characterized in that** the mean of the functionality expressed as the sum of Michael donors and Michael acceptors is greater/equal to 2 per polymer chain, in particular that the functionality of Michael donors and Michael acceptors independently of one another is greater/equal to 2.

4. The two-component bonding agent system according to one of the claims 1 to 3, **characterized in that** the base polymer is selected from polyamide, polyester, polyether, polyurethane, poly(meth)acrylate, silicone or vinyl ester copolymers, wherein the polymer chain is essentially linear.

5. The two-component bonding agent system according to one of the claims 1 to 4, **characterized in that** the Michael donor is selected from β-dicarbonyl groups, α-cyano-carbonyl derivatives, carbonyl derivatives with α-sulfoxide or α-sulfo groups or bis-cyanomethylene groups.

6. The two-component bonding agent system according to one of the claims 1 to 5, **characterized in that** amine-containing or amine-free bases are employed as the component B, in particular volatile or non-volatile organic amines or amine group-containing polymers.

7. The two-component adhesive comprising a bonding agent system according to one of the claims 1 to 6.

8. The two-component adhesive according to claim 7, **characterized in that** it comprises less than 35 wt.% auxiliaries and/or additives, in particular wherein the adhesive is free of organic solvents and also does not comprise any water.

9. The two-component adhesive according to one of the claims 7 to 8, **characterized in that** the adhesive exhibits a viscosity of less than 5000 mPas at a temperature of up to 50 °C.

10. The two-component adhesive according to one of the claims 7 to 8, **characterized in that** the component A additionally comprises low molecular weight compounds with a molecular weight between 150 to 1500 g/mol, which possess at least two Michael donor or Michael acceptor groups.

11. A process for bonding flexible substrates, **characterized in that** an adhesive according to one of the claims 7 to 10 is applied onto one substrate surface, volatile solvents are optionally evaporated and after this the second substrate is applied under pressure onto the coated surface.

12. The process for bonding flexible substrates according to claim 11, **characterized in that** component A is applied onto one substrate surface, component B onto a second substrate surface and after this both the surfaces are bonded together under pressure, wherein the bonded substrate composite is optionally heated to a temperature between 25 °C and 75 °C.

13. The process for bonding flexible substrates according to one of the claims 11 to 12, **characterized in that** the component A forms a storage-stable layer on the substrate surface.

14. Use of an adhesive according to one of the claims 7 to 10 as an adhesive for bonding flexible film substrates or as a structural adhesive for bonding wood, metal, glass, paper and similar substrates.

## Revendications

1. Système de liant à deux composants constitué par un composant A et par un composant B, contenant,
dans le composant A), au moins un polymère qui présente au moins un groupe accepteur de Michael, et en outre au moins un groupe donneur de Michael, les deux groupes fonctionnels ayant été réagis sur la chaîne polymère à titre individuel ou en groupe en position terminale, et
dans le composant B), un composé catalysant la réaction de Michael, et, de manière facultative, d'autres additifs et/ou adjuvants,
**caractérisé en ce que** le polymère du composant A présente un poids moléculaire moyen en nombre (M_{N}) entre 1.000 g/mole et 1.000.000 g/mole.

2. Système de liant à deux composants selon la revendication 1, **caractérisé en ce que** le poids moléculaire moyen en nombre du polymère s'élève entre 1.500 g/mole à 100.000 g/mole.

3. Système de liant à deux composants selon l'une quelconque des revendications 1 à 2, **caractérisé en ce que** la fonctionnalité moyenne, sous la forme de la somme du donneur de Michael et de l'accepteur de Michael est supérieure/égale à 2 par chaîne polymère, en particulier **en ce que** la fonctionnalité du donneur de Michael et de l'accepteur de Michael est supérieure/égale à 2 de manière réciproquement indépendante.

4. Système de liant à deux composants selon l'une quelconque des revendications 1 à 3, **caractérisé en ce que** le polymère de base est choisi parmi du polyamide, du polyester, du polyéther, du polyuréthane, du poly(méth)acrylate, du silicone ou des copolymères d'ester vinylique, la chaîne polymère possédant une structure essentiellement linéaire.

5. Système de liant à deux composants selon l'une quelconque des revendications 1 à 4, **caractérisé en ce que** le donneur de Michael est choisi parmi des groupes β-dicarbonyle, des dérivés α-cyano-carbonyle, des dérivés de carbonyle comprenant des groupes α-sulfoxydes ou des groupes α-sulfo, ou encore des groupes biscyanométhylène.

6. Système de liant à deux composants selon l'une quelconque des revendications 1 à 5, **caractérisé en ce qu'**on met en oeuvre, à titre de composant B, des bases aminées ou exemptes d'amines, en particulier des amines organiques volatiles ou non volatiles ou bien des polymères contenant des groupes amino.

7. Adhésif à deux composants contenant un système de liant selon l'une quelconque des revendications 1 à 6.

8. Adhésif à deux composants selon la revendication 7, **caractérisé en ce qu'**il contient des adjuvants et/ou des additifs à concurrence de moins de 35 % en poids, en particulier **en ce que** l'adhésif est exempt de solvants organiques et ne contient pas non plus d'eau.

9. Adhésif à deux composants selon l'une quelconque des revendications 7 à 8, **caractérisé en ce que** l'adhésif présente une viscosité inférieure à 5000 mPa.s à une température s'élevant jusqu'à 50 °C.

10. Adhésif à deux composants selon l'une quelconque des revendications 7 à 8, **caractérisé en ce que** le composant A contient en outre des composés à bas poids moléculaire possédant un poids moléculaire entre 150 et 1500 g/mole, qui présentent au moins deux groupes donneurs de Michael ou accepteurs de Michael.

11. Procédé pour le collage de substrats flexibles, **caractérisé en ce qu'**on applique, sur une surface de substrat, un adhésif selon l'une quelconque des revendications 7 à 10, de manière facultative on évapore les solvants volatils et on applique ensuite sous pression le deuxième substrat sur la surface enduite.

12. Procédé pour le collage de substrats flexibles selon la revendication 11, **caractérisé en ce qu'**on applique le composant A sur une surface de substrat, le composant B sur une deuxième surface de substrat et on colle ensuite l'une à l'autre les deux surfaces sous pression, le composite de substrats collés étant chauffé de manière facultative à une température entre 25 °C et 75 °C.

13. Procédé pour le collage de substrats flexibles selon l'une quelconque des revendications 11 à 12, **caractérisé en ce que** le composant A permet d'obtenir une couche stable à l'entreposage sur la surface de substrat.

14. Utilisation d'un adhésif selon l'une quelconque des revendications 7 à 10, à titre d'adhésif pour le collage de substrats pelliculaires flexibles, ou bien à titre d'adhésif structurel du bois, du métal, du verre, du papier et de substrats analogues.
